# EUROPEAN PATENT APPLICATION

(11) **EP 3 604 880 A1**
(43) Date of publication of application: **05.02.2020**
(21) Application number: 17903836.9
(22) Date of filing: 23.10.2017
(51) Int. Cl.: F16L 11/127, B63B 27/24

(54) **MARINE HOSE**

(30) Priority: 30.03.2017 JP 2017066702
(71) Applicant: The Yokohama Rubber Co., Ltd., Minato-ku Tokyo 105-8685 (JP)
(72) Inventor: ONO, Shunichi, Hiratsuka-shi Kanagawa 254-8601 (JP); FUSE, Noriyuki, Hiratsuka-shi Kanagawa 254-8601 (JP)
(74) Representative: Grünecker Patent- und Rechtsanwälte PartG mbB
(86) International application number: PCT/JP2017/038156
(87) International publication number: WO 2018/179542

(57) **Abstract**

While variations in an electrical resistance between mouthpieces at both ends are suppressed, the electrical resistance is adjusted to be within a required range. At least an outer circumferential surface (1204) of a hose body (12) is formed by an insulator. Respective mouthpieces (14) are formed by a conductive material, such as iron, and disposed on both ends of the hose body (12). A conductor (16) extends along the hose body (12) to electrically connect the mouthpieces (14) at both ends. A cut portion (24) that includes a pair of cut end portions (24A) and (24B) where the conductor (16) is cut and are opposed to one another is disposed in an intermediate portion in an extending direction of the conductors (16). The semi-electrical conductor (18) is inserted into the conductors (16) to adjust the electrical resistance between the mouthpieces (14) at both ends of the conductors (16) to be within a desired range. A conductive rubber is used as the semi-electrical conductor (18), and a part of the conductors (16) including the pair of cut end portions (24A) and (24B) is embedded with and held to the conductive rubber (26).

## Description

### Technical Field

The present invention relates to a marine hose for transporting, for example, a liquid, such as a crude oil, from a crude oil supply facility on the sea to a tanker.

### Background Art

There has been provided a marine hose of the type that includes a hose body in which at least an outer circumferential surface is formed by an insulator, such as rubber, and mouthpieces formed by a conductive material and disposed on respective both ends of the hose body. The marine hose is coupled to another marine hose via the mouthpieces (see Patent Literature 1).

The one marine hose has a length of, for example, approximately 12 m. Coupling a several tens of marine hoses on the sea to connect a crude oil supply facility and a tanker, and thus, a liquid, such as a crude oil, is transported.

In such a marine hose, when the mouthpiece of the marine hose is coupled to a mouthpiece on the other side, that is, a mouthpiece on the side of the crude oil supply facility or a mouthpiece on the tanker side, static electricity charged on the hose body or the other side possibly discharges between the mouthpiece of the marine hose and the mouthpiece on the other side and generates a spark, possibly hindering the coupling work of the mouthpieces.

Therefore, in order to escape the static electricity charged to the hose body, one that includes a wire extending along the hose body to electrically connect the mouthpieces at both ends is provided.

### Citation List

### Patent Literature

Patent Literature 1: JP 2009-281505 A

### Summary of Invention

### Technical Problem

However, a marine hose having a specification in which an electrical resistance between mouthpieces at both ends is specified within a predetermined range may be required, rather than electrically conducting between the mouthpieces at both ends of the marine hose.

In this case, a conductive material is mixed with rubber, which is an insulator constituting the hose body, to form a conductive rubber, and the electrical resistance between the mouthpieces at both ends is adjusted to be within the required range, but it is difficult to suppress variations in the electrical resistance between the mouthpieces at both ends in the manufacturing method of mixing the conductive material with the rubber.

As a result, it has been disadvantageous when the electrical resistance between the mouthpieces at both ends has been adjusted to be within the required range.

The present invention has been devised in view of the circumstances described above, and an object thereof is to provide a marine hose advantageous in adjusting an electrical resistance between mouthpieces at both ends to be within a required range while suppressing variations in the electrical resistance between the mouthpieces at both ends.

### Solution to Problem

To achieve the object described above, the present invention is a marine hose that includes a hose body, mouthpieces, and a conductor. In the hose body, at least an outer circumferential surface is formed by an insulator. The mouthpieces are formed by a conductive material. The mouthpieces are disposed on respective both ends of the hose body. The conductor extends along the hose body to electrically connect the mouthpieces at both ends. A semi-electrical conductor is inserted into the conductor. The semi-electrical conductor adjusts an electrical resistance between the mouthpieces at both ends of the conductor within a desired range.

### Advantageous Effects of Invention

According to the present invention, since the semi-electrical conductor is inserted into the conductor, which electrically connects the mouthpieces at both ends, by appropriately selecting a material constituting the semi-electrical conductor, the electrical resistance between the mouthpieces at both ends of the conductor can be adjusted to be within the desired range.

As a result, compared with the conventional case where the conductive material is mixed with the rubber to form the conductive rubber and the electrical resistance between the mouthpieces at both ends is adjusted to be within the required range, the present invention is advantageous in that the electrical resistance between the mouthpieces at both ends is adjusted to be within the required range while variations in the electrical resistance between the mouthpieces at both ends of the marine hose are suppressed.

### Brief Description of Drawings

FIG. 1 is a side view of a marine hose according to a first embodiment.
FIG. 2 is a diagram viewed from the arrow X of FIG. 1.
FIG. 3A is a cross-sectional view taken along the line A-A of FIG. 1, FIG. 3B is a cross-sectional view taken along the line B-B of FIG. 1, FIG. 3C is a cross-sectional view taken along the line C-C of FIG. 1, FIG. 3D is a cross-sectional view taken along the line D-D of FIG. 1, and FIG. 3E is a cross-sectional view taken along the line E-E of FIG. 1.
FIG. 4 is a side view of a marine hose according to a second embodiment.

### Description of Embodiments

### First Embodiment

Next, a marine hose according to the embodiment of the present invention will be described with reference to the drawings.

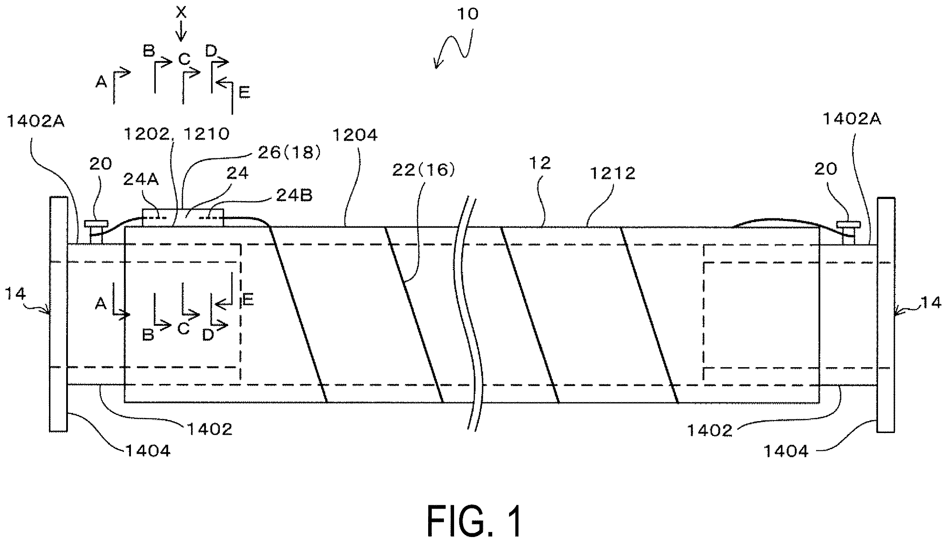

As illustrated in FIG. 1, a marine hose 10 includes a hose body 12, mouthpieces 14, a conductor 16, and a semi-electrical conductor 18.

The hose body 12 is constituted including an inner rubber layer, one layer or two or more layers of reinforcing layers disposed on the outer side of the inner rubber layer and inside of which fiber cords are embedded, and an outer rubber layer disposed on the outer side of the reinforcing layers. At least an outer circumferential surface 1204 of the hose body 12 is formed by an insulator.

The mouthpieces 14 are formed by a conductive material, such as iron, and are disposed on respective both ends of the hose body 12.

The mouthpiece 14 includes a cylindrical portion 1402 for coupling the hose body and a flange portion 1404 disposed on an end portion of the cylindrical portion 1402 for joining with a target member or device.

The cylindrical portion 1402 has an outer circumferential portion fitted to an inner circumferential portion of the end portion of the hose body 12 to be coupled to the hose body 12.

Both ends of the hose body 12 in the longitudinal direction are located on outer circumferential surfaces 1402A of the cylindrical portions 1402, and an outer circumferential surface of a hose body part 1202 located on the outer circumferential surface 1402A is formed by a cylindrical surface 1210 coaxial with the cylindrical portion 1402 (outer circumferential surface 1402A).

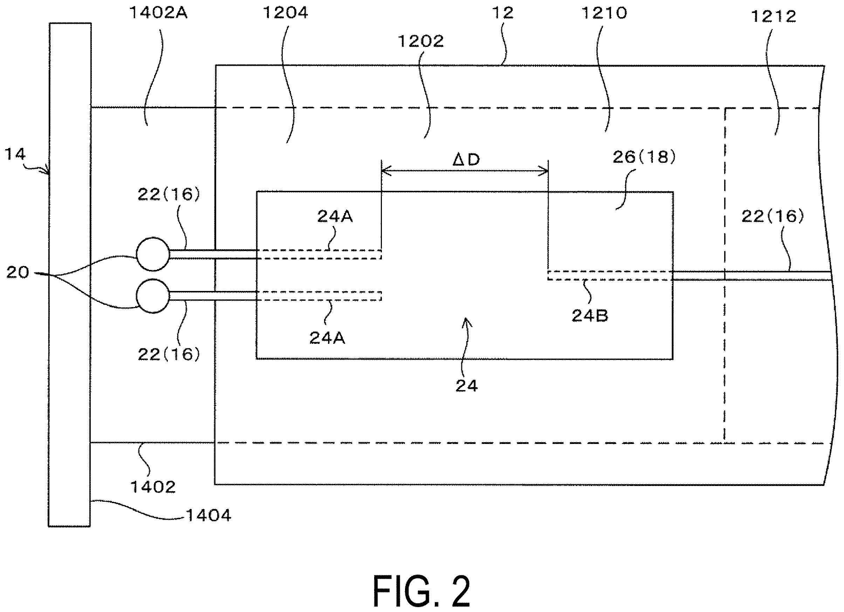

As illustrated in FIG. 2, with the end portion of the hose body 12 coupled to the cylindrical portion 1402, a part near the flange portion 1404 of the cylindrical portion 1402 is not covered by the end portion of the hose body 12, but the outer circumferential surface 1402A is exposed to the outside. Shaft portions 20 formed by a conductive material for coupling conductors 16 are welded to the exposed outer circumferential surface 1402A of the cylindrical portion 1402.

At least one or more of the shaft portions 20 are disposed in the mouthpieces 14, which are disposed on both ends of the hose body 12.

The flange portion 1404 has a ring plate shape extending radially outward of the cylindrical portion 1402 from the end of the cylindrical portion 1402, and a plurality of bolt insertion holes (not illustrated) are formed in the flange portion 1404 at intervals in the circumferential direction.

The flange portion 1404 is joined by fastening bolts via the bolt insertion holes to a mouthpiece on the other side to which the marine hose 10 is joined (a mouthpiece on a side of a crude oil supply facility, a mouthpiece on a tanker side) or the mouthpiece 14 of another marine hose 10.

The conductors 16 extend along the hose body 12 to electrically connect the mouthpieces 14 at both ends.

The conductor 16 is constituted by a wire 22, that is, a braided wire formed by weaving a thin metal wire in a mesh shape.

In the embodiment, one ends in the longitudinal direction of the conductors 16 are constituted by the two wires 22, and the remaining conductor 16 part except for the one ends is constituted by the single wire 22.

The respective end portions of the two wires 22 constituting the one ends in the longitudinal direction of the conductors 16 are wound around and fixed to the two shaft portions 20 of the mouthpieces 14, and the end portion of the single wire 22 constituting the other end in the longitudinal direction of the conductor 16 is wound around and fixed to the one shaft portion 20 of the mouthpiece 14.

As a result, both ends of the conductors 16 are electrically connected to the mouthpieces 14 at both ends via the shaft portions 20, and the intermediate portions of the conductors 16 are helically wound around the outer circumferential surface 1204 of the hose body 12.

Note that the conductor 16 may be constituted by a single metal wire or a plurality of metal wires. However, in the use of the wires 22 as in the embodiment, since the wires 22 are excellent in flexibility, a stress applied to the wires 22 when the hose body 12 is deformed is suppressed, it is advantageous in improving durability of the wires 22.

As illustrated in FIG. 2, a cut portion 24 including a pair of cut end portions 24A and 24B where the conductor 16 is cut and opposed to one another is disposed in the intermediate portions in the extending direction of the conductors 16.

In the embodiment, the cut portion 24 is disposed in the locations of the conductors 16 located in the hose body part 1202 on the cylindrical portion 1402, and the cut portion 24 includes the pair of cut end portions 24A and 24B opposed to one another by cutting the conductors 16.

In the embodiment, the cut end portions 24A, which are located near the two shaft portions 20 among the pair of cut end portions 24A and 24B, are constituted by the respective cut end portions of the two wires 22, and the cut end portion 24B, which is located on the side away from the two shaft portions 20 among the pair of cut end portions 24A and 24B, is constituted by the cut end portion of the single wire 22.

Note that the number of the wires 22 constituting the pair of cut end portions 24A and 24B may be one for each. However, configuring the wires 22 of the one cut end portions 24A into plural as in the embodiment or configuring the wires 22 of both of the cut end portions 24A and 24B into plural is more advantageous in enhancing the stability of an electrical resistance value between the mouthpieces 14 at both ends of the conductors 16.

Furthermore, the number of the wires 22 constituting one cut end portions among the pair of cut end portions 24A and 24B and the number of wires 22 constituting the other cut end portions may be the same or different.

The semi-electrical conductor 18 is inserted into the conductors 16 to adjust the electrical resistance between the mouthpieces 14 at both ends of the conductors 16 to be within a desired range.

The desired range is, for example, in a range from 0.025 MΩ or more to 1 MΩ or less.

In the embodiment, a conductive rubber is used as the semi-electrical conductor 18.

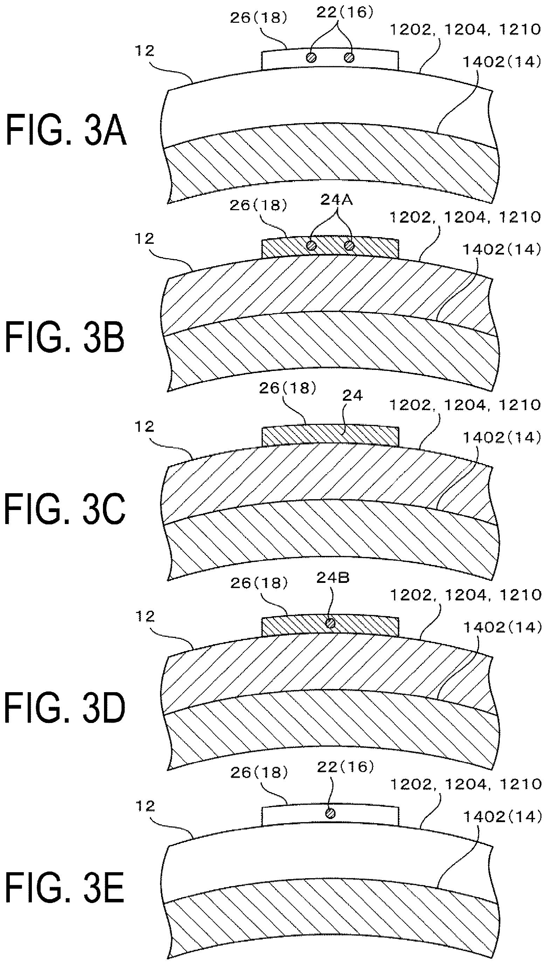

Specifically, as illustrated in FIGS. 1, 2, and 3A to 3E, a conductive rubber 26 is disposed on the outer circumferential surface 1204 of the hose body part 1202 attached on the cylindrical portion 1402 of one mouthpiece 14 among the mouthpieces 14 at both ends, and a part of the conductors 16 including the pair of cut end portions 24A and 24B are embedded with and held to the conductive rubber 26.

Then, with the pair of cut end portions 24A and 24B separated, the conductive rubber 26 is filled between the pair of cut end portions 24A and 24B.

In the embodiment, with the wire 22 parts including the pair of cut end portions 24A and 24B sandwiched between two conductive rubber plates, the two conductive rubber plates are overlappingly disposed on the outer circumferential surface 1204 of the hose body part 1202 positioned on the cylindrical portion 1402, and the two conductive rubber plates are vulcanized simultaneously with a vulcanization of the marine hose 10.

This forms the conductive rubber 26, the wire 22 parts including the pair of cut end portions 24A and 24B are vulcanized and bonded to the conductive rubber 26, and at the same time, the conductive rubber 26 is integrally joined to the outer circumferential surface 1204 of the hose body part 1202.

Note that in a state where the wire 22 parts including the pair of cut end portions 24A and 24B are sandwiched between the two conductive rubber plates, the two conductive rubber plates may be vulcanized to form the conductive rubber 26, and then the conductive rubber 26 may be adhered to the outer circumferential surface 1204 of the hose body part 1202 with an adhesive.

However, as in the embodiment, joining the conductive rubber 26 to the outer circumferential surface 1204 of the hose body 12 during the vulcanization of the conductive rubber 26 and the hose body 12 allows the omission of the adhering process, and is advantageous in achieving an efficient manufacturing process of the marine hoses 10.

As described above, the hose body part 1202 on the mouthpieces 14, in other words, both ends in the longitudinal direction of the hose body 12 attached to the outer circumferential surfaces 1402A of the cylindrical portions 1402, is formed by the cylindrical surface 1210 coaxial with the cylindrical portions 1402. Accordingly, the conductive rubber 26 can be easily disposed along the outer circumferential surface 1204 of the hose body part 1202, and the work of bonding with the adhesive or the work of joining the conductive rubber 26 to the outer circumferential surface 1204 of the hose body part 1202 by vulcanization can be facilitated, and is advantageous in improving workability.

Next, the effects of the present embodiment will be described.

According to the embodiment, the semi-electrical conductor 18 is inserted into the conductors 16, which electrically connect the mouthpieces 14 at both ends. Accordingly, by appropriately selecting the material constituting the semi-electrical conductor 18, the electrical resistance between the mouthpieces 14 at both ends of the conductors 16 can be adjusted to be within the desired range.

As a result, compared with the conventional case where the conductive rubber 26 is mixed with the rubber as the insulator constituting the hose body 12 and the electrical resistance between the mouthpieces 14 at both ends is adjusted to be within a required range, the embodiment is advantageous in that the electrical resistance of the semi-electrical conductor 18 is easily and reliably adjusted while the variations are suppressed.

Accordingly, this is advantageous in that the variations in the electrical resistance between the mouthpieces 14 at both ends of the marine hose 10 is suppressed and the electrical resistance between the mouthpieces 14 at both ends is adjusted to be within the required range.

In addition, in the embodiment, the semi-electrical conductor 18 is constituted by the conductive rubber 26 filled between the pair of cut end portions 24A and 24B with the pair of cut end portions 24A and 24B of the conductors 16 separated.

Thus, as illustrated in FIG. 2, even a simple method, such as an adjustment of a distance ΔD between the pair of cut end portions 24A and 24B of the conductors 16, can adjust the electrical resistance of the semi-electrical conductor 18, is advantageous in the efficient manufacturing work of the marine hoses 10.

Although configuring the semi-electrical conductor 18 using a resistor is possible, since the resistor is hard and brittle and likely to be damaged and deteriorated due to a load, disadvantageous in durability.

In contrast, configuring the semi-electrical conductor 18 with the conductive rubber 26 as in the embodiment makes the conductive rubber 26 elastically deformable, and thus, the damage and the deterioration due to a load can be reduced, and is advantageous in improving durability.

In addition, in the embodiment, the part of the conductors 16 including the pair of cut end portions 24A and 24B is embedded with and held to the conductive rubber 26. Accordingly, the distance ΔD between the pair of cut end portions 24A and 24B is less likely to change, advantageous in suppressing the variations in the electrical resistance between the mouthpieces 14 at both ends of the marine hose 10.

The conductive rubber 26 with which the part of the wires 22 including the pair of cut end portions 24A and 24B of the conductors 16 is embedded may be joined to the outer circumferential surface 1204 of the hose body part 1202, which is positioned between the mouthpieces 14 at both ends or may be embedded with the inside of the hose body part 1202. Meanwhile, as in the embodiment, disposing the conductive rubber 26 with which a part of the conductors 16 including the pair of cut end portions 24A and 24B is embedded in the outer circumferential surface 1204 of the hose body part 1202 attached on the cylindrical portion 1402 of one mouthpiece 14 among the mouthpieces 14 at both ends provides the following effects.

Even when a load is applied to the hose body 12 and the hose body 12 is deformed, the load is less likely to be applied to the conductive rubber 26, which is disposed in the outer circumferential surface 1204 of the hose body part 1202 attached on the cylindrical portion 1402 of the mouthpiece 14.

This allows reducing a drop of the part of the conductor 16 embedded with the conductive rubber 26 from the conductive rubber 26, and is advantageous in improving durability.

### Second Embodiment

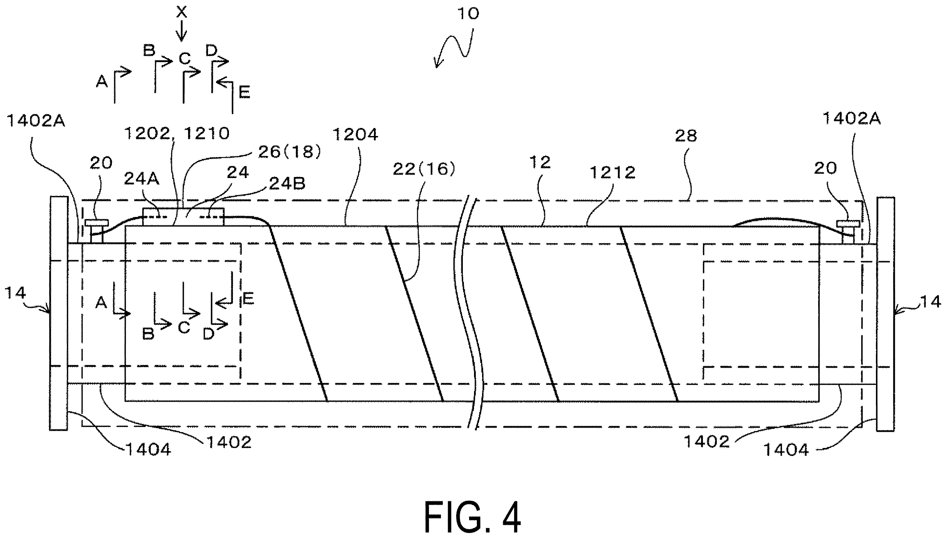

Next, the second embodiment will be described with reference to FIG. 4.

In the following embodiment, components and members identical to those of the first embodiment have reference signs identical to those of the first embodiment, and detailed descriptions thereof are omitted.

The second embodiment is a modified example of the first embodiment and differs from the first embodiment in that the second embodiment further includes a cover rubber 28 covering all of the conductors 16 and the semi-electrical conductor 18.

In the embodiment, the cover rubber 28 covers all of the hose body 12 including the mouthpieces 14 at both ends.

As described in more detail, the cover rubber 28 covers a part of the surface of the marine hose 10 excluding locations near the flange portions 1404 of the cylindrical portions 1402 of the mouthpieces 14 at both ends.

In other words, the cover rubber 28 covers the part of the outer circumferential surfaces 1402A of the cylindrical portions 1402 of the mouthpieces 14 at both ends excluding locations near the flange portions 1404, the outer circumferential surface 1204 of the hose body part 1202, the conductors 16, the semi-electrical conductor 18, and the shaft portions 20.

According to the second embodiment, the cover rubber 28 protects the conductors 16, the semi-electrical conductor 18, and the shaft portions 20 against a stress applied from a structure, such as the crude oil supply facility and the tanker, and corrosion of the conductors 16, the semi-electrical conductor 18, and the shaft portions 20 caused by sea water can be reduced, and is advantageous in improving the durability of the marine hose 10.

While the case where the numbers of the cut portions 24 and the semi-electrical conductors 18 are one has been described in the embodiment, needless to say, two or more of the cut portions 24 and the semi-electrical conductors 18 may be disposed.

For example, the two conductive rubbers 26 with which a part of the wires 22 including the pair of the cut end portions 24A and 24B of the conductors 16 is embedded may be disposed, and the respective conductive rubbers 26 may be attached to the outer circumferential surfaces 1402A of the hose body 12 located on the outer circumferential surfaces 1402A of the cylindrical portions 1402 of the mouthpieces 14 at both ends.

### Reference Signs List

- 10: Marine hose
- 12: Hose body
- 1204: Outer circumferential surface
- 14: Mouthpiece
- 1402: Cylinder portion
- 1402A: Outer circumferential surface
- 16: Conductor
- 18: Semi-electrical conductor
- 22: Wire
- 24: Cut portion
- 24A, 24B: Cut end portion
- 26: Conductive rubber
- 28: Cover rubber

## Claims

1. A marine hose comprising:
a hose body in which at least an outer circumferential surface is formed by an insulator; mouthpieces formed by a conductive material, the mouthpieces being disposed on respective both ends of the hose body; and
a conductor extending along the hose body to electrically connect the mouthpieces at both ends, wherein
a semi-electrical conductor is inserted into the conductor, the semi-electrical conductor adjusting an electrical resistance between the mouthpieces at both ends of the conductor within a desired range.

2. The marine hose according to claim 1, comprising:
a cut portion including a pair of cut end portions where the conductor is cut and opposed to one another in an intermediate portion in an extending direction of the conductors;
a conductive rubber filled between the pair of cut end portions with the pair of cut end portions separated, wherein
the semi-electrical conductor is formed by the conductive rubber.

3. The marine hose according to claim 2, wherein
a part of the conductors including the pair of cut end portions is embedded with and held to the conductive rubber; and
the conductive rubber is attached to the hose body.

4. The marine hose according to claim 3, wherein
the mouthpiece includes a cylindrical portion for coupling the hose body;
the hose body has both ends in a longitudinal direction attached on outer circumferential surfaces of the cylindrical portions; and
the conductive rubber is attached to one mouthpiece among the mouthpieces at both ends of the hose body or an outer circumferential surface of the hose body located on the outer circumferential surfaces of the cylindrical portions of both of the mouthpieces.

5. The marine hose according to claim 4, wherein
the conductive rubber is joined to the outer circumferential surface of the hose body during a vulcanization of the conductive rubber and the hose body.

6. The marine hose according to any one of claims 1 to 5, further comprising
a cover rubber that covers throughout the conductor and the semi-electrical conductor.

7. The marine hose according to claim 4 or 5, wherein
the hose body has both ends in a longitudinal direction attached to the outer circumferential surfaces of the cylindrical portions, both the ends being formed by cylindrical surfaces coaxial with the outer circumferential surfaces.
